(19) Europäisches Patentamt
European Patent Office
Office européen des brevets

(11) Publication number: **0 433 715 A2**

# (12) EUROPEAN PATENT APPLICATION

(21) Application number: **90122626.6**

(22) Date of filing: **27.11.90**

(51) Int. Cl.5: **C08F 279/04**, C08F 2/22, C08L 55/02, C08L 25/12, //(C08F279/04,212:08,220:44), (C08L55/02,25:12),(C08L25/12, 55:02)

(30) Priority: **21.12.89 US 454541**

(43) Date of publication of application: **26.06.91 Bulletin 91/26**

(84) Designated Contracting States: **DE ES FR GB IT NL**

(71) Applicant: **GENERAL ELECTRIC COMPANY**
**1 River Road**
**Schenectady New York 12305(US)**

(72) Inventor: **Kidder, Kevin Reed**
**929 Swann Street**
**Parkersburg, West Virginia(US)**

(74) Representative: **Catherine, Alain**
**General Electric France Service de Propriété Industrielle 18 Rue Horace Vernet**
**F-92136 Issy-Les-Moulineaux Cedex(FR)**

## (54) ABS graft copolymers and blends thereof having multiaxial impact resistance.

(57) Graft copolymers comprising a rubber substrate and a grafted portion are characterized in that the rubber substrate is formed by batch emulsion polymerization of a mixture comprising a conjugated diene monomer, an aromatic monovinylidene monomer and an acrylic monomer, and has an average particle size of greater than about 200 nm. The graft portion of the copolymers is preferably formed from an aromatic monovinylidene monomer and an acrylic monomer. The copolymers are suitable for use in blends with one or more additional thermoplastic polymers.

EP 0 433 715 A2

# ABS GRAFT COPOLYMERS AND BLENDS THEREOF HAVING MULTIAXIAL IMPACT RESISTANCE

## FIELD OF THE INVENTION

The present invention relates to ABS graft copolymers and blends thereof having multiaxial impact resistance. More particularly, the present invention relates to ABS graft copolymers in which the rubber substrate is formed by batch emulsion polymerization of a mixture comprising a conjugated diene monomer, an aromatic monovinylidene monomer and an acrylic monomer.

## BACKGROUND OF THE INVENTION

ABS graft copolymers are well known in the polymer industry and are advantageous for use in various applications. Generally, the ABS polymers contain a rubbery substrate or backbone portion formed of a conjugated diene such as butadiene, and a grafted portion. The grafted portion is typically formed of one or more rigid polymer forming monomers including, for example, aromatic monovinylidene monomers such as styrene and substituted styrenes, acrylic monomers such as acrylonitrile, alkyl acrylates and alkyl methacrylates, and ethylenically unsaturated dicarboxylic acids and derivatives thereof such as maleic anhydride, maleimide and substituted maleimides. Numerous methods are known in the art for controlling the starting monomers and/or reaction conditions in order to optimize one or more properties of such ABS polymers and/or for improving the overall properties of polymer blend compositions in which the ABS copolymers are employed. For example, the Moore et al U.S. Patent No. 4,783,508 discloses an emulsion polymerization process for preparing a rubber substrate for use in graft copolymers wherein the rubber substrate particles are disclosed as containing an improved quantity and size of occluded matrix polymer, thereby resulting in an improved rubber phase volume without substantial loss in modulus. In the Moore et al process, the rubbery polymer is contacted with at least one addition polymerizable graft producing monomer under conditions such that the rubber emulsion particles imbibe the monomer but substantially no monomer polymerization occurs, after which free radical polymerization of the monomer is initiated. Additionally, the Moore et al U.S. Patent No. 4,602,064 discloses a multistep process for forming a rubber particle core onto which a uniform layer of polymer is grafted. The methods disclosed by Moore et al are disadvantageous in that they employ a number of process steps and require close process control.

## SUMMARY OF THE INVENTION

Accordingly, it is an object of the present invention to provide ABS graft copolymers and, more particularly, to provide ABS graft copolymers which exhibit advantageous physical properties and which may be easily prepared. It is a further object of the invention to provide ABS graft copolymers which are suitable for use in blends with one or more additional thermoplastic polymers. It is a further object of the invention to provide ABS graft copolymers which may be used to provide compositions having improved multiaxial impact resistance.

These and additional objects are provided by the graft copolymers and blend compositions of the present invention. More particularly, the present graft copolymers comprise a rubber substrate and a grafted portion wherein the rubber substrate is formed by batch emulsion polymerization of a mixture comprising a conjugated diene rubber, an aromatic monovinylidene monomer and an acrylic monomer, and the grafted portion is formed from an aromatic monovinylidene monomer and an acrylic monomer. The emulsion polymerization is controlled to provide rubber substrate particles having an average particle size greater than about 200 nm. The ABS graft copolymers of the invention are advantageous in that the rubber substrate may be easily prepared using the batch emulsion polymerization process. Additionally, the ABS graft copolymers are advantageous in that they provide compositions exhibiting improved multiaxial impact resistance.

These and additional objects and advantages will be more fully understood in view of the following detailed description.

## DETAILED DESCRIPTION

The graft copolymers according to the present invention comprise a rubber substrate and a grafted portion. The rubber substrate is formed by batch emulsion polymerization of a mixture comprising a conjugated diene monomer, an aromatic vinylidene monomer and an acrylic monomer. The emulsion

polymerization is controlled to provide rubber substrate particles having an average particle size greater than about 200 nm. The grafted portion is formed from an aromatic monovinylidene monomer and an acrylic monomer.

More particularly, the specific conjugated diene monomers normally utilized in preparing the rubber substrate of the graft copolymers are generally described by the following formula:

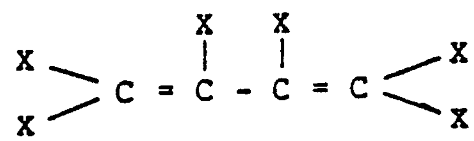

wherein X is selected from the group consisting of hydrogen, alkyl groups containing from one to five carbon atoms, chlorine and bromine. Examples of dienes that may be used are butadiene, isoprene, 1,3-heptadiene, methyl-1,3-pentadiene, 2,3-dimethyl-1,3-butadiene, 2-ethyl-1,3-pentadiene, 1,3- and 2,4-hexadienes, chloro and bromo substituted butadienes such as dichlorobutadiene, bromobutadiene, dibromobutadiene, mixtures thereof, and the like. A preferred conjugated diene is butadiene.

The monovinylaromatic monomers which may be utilized in preparing the rubber substrate are generically described by the following formula:

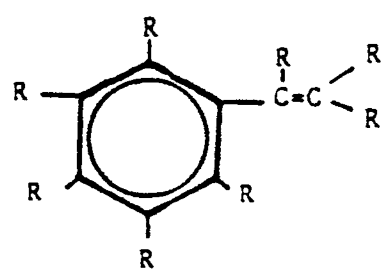

wherein R is selected from the group consisting of hydrogen, halogens, alkyl, cycloalkyl, aryl, alkaryl, aralkyl, alkoxy and aryloxy. Specific vinylaromatic compounds include styrene, para methylstyrene, α-methylstyrene, 3,5-diethylstyrene, 4-n-propylstyrene, α-methyl vinyltoluene, α-chlorostyrene, α-bromostyrene, dichlorostyrene, dibromostyrene, tetrachlorostyrene, mixtures thereof, and the like. The preferred monovinylaromatic hydrocarbons used are styrene, α-methylstyrene, and/or dibromostyrene.

Acrylic monomers suitable for use in the rubber substrate are described generically by the following formula:

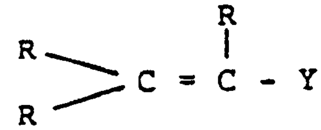

wherein R is as previously defined and Y is selected from the group consisting of cyano and carbalkoxy groups wherein the alkoxy group of the carbalkoxy contains from one to about twelve carbon atoms. Examples of such monomers include acrylonitrile, ethacrylonitrile, methacrylonitrile, α-chloroacrylonitrile, ß-chloroacrylonitrile, α-bromoacrylonitrile, ß-bromoacrylonitrile, methyl acrylate, ethyl acrylate, butyl acrylate, propylacrylate, isopropyl acrylate, alkyl methacrylates, and mixtures thereof. Preferred acrylic monomers include acrylonitrile, ethyl acrylate and methyl methacrylate.

The rubber substrate is prepared by batch emulsion polymerization of the monomer mixture. Emulsion polymerization methods are well known in the art and generally include a soap or surfactant, a free radical initiator and a chain transfer agent in the emulsion polymerization medium. Examples of suitable soaps/surfactants include fatty acid soaps and especially water soluble, long chain fatty acid soaps such as sodium or potassium laurate, myristate, palmitate, oleate and stearate. Water soluble sodium or potassium soaps of tall oil and the rosin soaps, including disproportionated rosin soaps, may also be used. If desired,

a secondary surfactant may be present, examples of which include alkali metal sulfonates derived from alkyl and/or aryl sulfonic acids such as sodium alkyl naphthalene sulfonate, and alkali metal alkyl sulfates such as sodium alkyl sulfates. Suitable free radical initiators include organic hydroperoxides and ionizable heavy metal salts. Suitable chain transfer agents include the well known mercaptan-type compounds. It is an important and advantageous feature of the invention that the monomer mixture may be added all at once to the emulsion polymerization medium to allow formation of the rubber substrate. Additionally, the conditions of the emulsion polymerization should be controlled to provide rubber substrate particles having an average particle size, prior to agglomeration, of greater than about 200 nm.

It is preferred that the rubber substrate of the graft copolymer include the aromatic monovinylidene monomer and the acrylic monomer in an amount sufficient to improve the multiaxial impact resistance of compositions containing the graft copolymer. Preferably however the rubber substrate comprises at least 40 weight percent of the conjugated diene monomer, and more preferably, from about 50 to about 80 weight percent of the conjugated diene monomer. Additionally, while the weight ratio of monovinylidene aromatic monomer to acrylic monomer in the rubber substrate may be varied, it is preferred that the weight ratio of monovinylidene aromatic monomer to acrylic monomer in the rubber substrate is greater than about 1. The mixture which is employed to form the rubber substrate may further include additional monomers as long as such monomers do not detract from the advantageous physical properties of the graft copolymer.

The grafted portion of the graft copolymers of the present invention is preferably formed from an aromatic monovinylidene monomer and an acrylic monomer, suitable examples of which include those discussed above for use in the rubber substrate. Preferred monomers for use in forming the graft portion of the copolymer comprise styrene and acrylonitrile. While the weight ratio of the monovinylidene aromatic monomer to the acrylic monomer in the grafted portion of the copolymer may vary depending on the application of the copolymer, it is preferred that the weight ratio of monovinylidene aromatic monomer to acrylic monomer in the grafted portion is greater than about 1. Additional monomers may also be employed in forming the graft portion of the copolymer if desired.

The graft copolymer may contain varying portions of the rubber substrate and the graft portion depending on the intended application of the graft copolymer. It is preferred that the graft copolymer contain at least 40 weight percent, and more preferably 50 weight percent, of the rubber substrate in order that the copolymer exhibit good impact properties.

The graft copolymers of the invention are suitable for use in polymer blends with one or more additional thermoplastic polymers. Such blends may comprise from about 5 to about 95 weight percent of the graft copolymer and from about 95 to about 5 weight percent of the additional thermoplastic polymers. More preferably, such blends may comprise from about 5 to about 50 weight percent of the graft copolymer and from about 95 to about 50 weight percent of the additional thermoplastic polymers. The graft copolymers are advantageous in providing such compositions with improved multiaxial impact resistance. Although various thermoplastic polymers may be employed in such blends, particularly good results have been obtained by blending the graft copolymers of the present invention with styrene polymers, particularly rigid styrene polymers as is demonstrated in the examples set forth below.

The following examples demonstrate the preparation of the graft copolymers and blends according to the present invention. Unless otherwise specified, all parts are by weight.

## EXAMPLE 1

A reaction medium comprising 85 parts demineralized water, 1.5 parts potassium oleate, 0.5 parts of a 30% solution of sodium lauryl sulfate, 2.3 parts tetrasodium pyrophosphate, 0.2 parts potassium peroxysulfate, 0.3 parts tert-dodecyl mercaptan, 20 parts acrylonitrile (AN), 20 parts styrene (S) and 60 parts butadiene (B) was prepared and heated to 155°F for reaction. A conversion of 82.3% based on the total of the monomers charged to the reaction medium was achieved. 70 parts (solids basis) of the resulting rubber latex was grafted with 22.5 parts styrene monomer and 7.5 parts acrylonitrile monomer. The resulting graft copolymer was isolated by coagulating the latex with calcium chloride, filtering and drying. A polymer blend composition was then prepared comprising 21.4 parts of the graft copolymer, 78.6 parts of a rigid styrene-acrylonitrile (SAN) copolymer (Mw of 98,000 and a styrene to acrylonitrile ratio of 3:1), 1.0 part of EBS wax and 0.5 parts magnesium stearate by melt blending with a Banbury mixer.

The resulting blend was subjected to measurement of notched Izod impact according to ASTM-D256, melt viscosity according to ASTM-D3835-79 at 1,000 $sec^{-1}$ and 260°C, and Dynatup fail point energy and total energy according to a modified version Of ASTM-D-3763-85. The results of these measurements are set forth below in the Table.

EXAMPLE 2

In this example, a graft copolymer and a blend composition were prepared in manners similar to those described in Example 1 except that in the preparation of the rubber substrate of the graft copolymer, the monomer mixture comprised 10 parts acrylonitrile, 30 parts styrene and 60 parts butadiene and a conversion of 86.6% based on the total of the monomers charged to the emulsion reaction medium was achieved. The resulting blend composition was also subjected to the measurements described in Example 1. The results of these measurements are set forth in the Table.

EXAMPLE 3

A reaction medium was prepared comprising 85 parts demineralized water, 1.5 parts potassium oleate, 0.5 parts of a 30% solution of sodium lauryl sulfate, 2.3 parts tetrasodium pyrophosphate, 0.2 parts potassium peroxysulfate, 0.3 parts tert-dodecyl mercaptan, 20 parts acrylonitrile, 20 parts styrene and 60 parts butadiene. The medium was reacted at 155°F for 18 hours and then at 160°F for five hours. An additional initiator shot comprising 0.2 parts potassium peroxysulfate and 5.0 parts demineralized water was added after 20 hours. A conversion of 83.4% based on the total amount of monomers charged to the reaction medium was achieved. The resulting latex had an average particle size of 290 nm as measured by the turbidity method and a swell index of 20.1. A graft copolymer was formed by grafting 50 parts (solids basis) of the rubber latex with 37.5 parts styrene and 12.5 parts acrylonitrile. The resulting graft copolymer was isolated by coagulating the latex with calcium chloride, filtering and drying. A polymer blend composition was then prepared containing 30 parts of the graft copolymer, 70 parts of the styrene-acrylonitrile copolymer described in Example 1, 1.0 parts EBS wax and 0.5 parts magnesium stearate by blending using a Banbury mixer. The resulting blend composition was subjected to the measurements described in Example 1, the results of which measurements are set forth in the Table.

COMPARATIVE EXAMPLE 4

In this comparative example, a graft copolymer and polymer blend composition were prepared following the procedures described in Example 1 except that in the preparation of the graft copolymer, the rubber substrate was prepared from 100 parts butadiene rather than a mixture of acrylonitrile, styrene and butadiene as described in Example 1. The resulting rubber latex exhibited an average particle size as measured by the turbidity method of 240 nm. The blend composition was subjected to the measurements described in Example 1, the results of which measurements are set forth in the Table.

COMPARATIVE EXAMPLE 5

The rubber latex substrate prepared in Comparative Example 4 was employed in this example. Using this rubber latex a graft copolymer was prepared from 50 parts (solids basis) of the rubber latex, 37.5 parts styrene and 12.5 parts acrylonitrile. The graft copolymer was isolated by coagulating the latex with calcium chloride, filtering and drying. A polymer blend composition was prepared from 30 parts of the graft copolymer, 70 parts of the styrene-acrylonitrile copolymer described in Example 1, 1.0 part EBS wax and 0.5 parts magnesium stearate by melt blending using a Banbury mixer. The resulting blend composition was subjected to the measurements described in Example 1. The results of these measurements are set forth in the Table.

TABLE

| | EXAMPLE | | | | |
|---|---|---|---|---|---|
| | 1 | 2 | 3 | CE4 | CE5 |
| RUBBER, pbw | | | | | |
| B | 60 | 60 | 60 | 100 | 100 |
| S | 20 | 30 | 20 | -- | -- |
| AN | 20 | 10 | 20 | -- | -- |
| GRAFT, pbw | | | | | |
| rubber | 70 | 70 | 50 | 70 | 50 |
| S | 22.5 | 22.5 | 37.5 | 22.5 | 37.5 |
| AN | 7.5 | 7.5 | 12.5 | 7.5 | 12.5 |
| BLEND, pbw | | | | | |
| graft | 21.4 | 21.4 | 30 | 21.4 | 30 |
| SAN | 78.6 | 78.6 | 70 | 78.6 | 70 |
| Notched Izod Impact, ft-lb/in | 3.1 | 4.4 | 3.2 | 3.3 | 2.9 |
| Viscosity, 1000 $sec^{-1}$, 260°C, poise | 1496 | 1483 | 1320 | 1057 | 1183 |
| Dynatup Fail Point Energy, ft-lb | 34.5 | 37.8 | 29.1 | 6.97 | 7.06 |
| Total Energy, ft-lb | 42.4 | 44.9 | 45.4 | 14.41 | 8.45 |

The results set forth in the Table demonstrate that the graft copolymer according to the present invention containing a rubber substrate formed of a conjugated diene monomer, an aromatic monovinylidene monomer and an acrylic monomer provided compositions exhibiting significantly improved multiaxial impact resistance as demonstrated by the Dynatup fail point energy and total energy as compared with compositions including a graft copolymer containing a conjugated diene rubber substrate. Additionally, as Examples 1-3 demonstrate, the graft copolymer of the invention includes a rubber substrate which may be easily prepared by batch emulsion polymerization of the monomer mixture.

The preceding examples are set forth to illustrate specific embodiments of the invention and are not intended to limit the scope of the compositions and methods of the present invention. Additional embodiments and advantages within the scope of the claimed invention will be apparent to one of ordinary skill in the art.

## Claims

1. A graft copolymer comprising a rubber substrate and a grafted portion, said rubber substrate being formed by batch emulsion polymerization of a mixture comprising a conjugated diene monomer, an aromatic monovinylidene monomer and an acrylic monomer, and having an average particle size of greater than about 200 nm, and said grafted portion being formed from an aromatic monovinylidene monomer and an acrylic monomer.

2. A graft copolymer as defined by claim 1, wherein the rubber substrate is formed from butadiene, a styrene monomer and acrylonitrile.

3. A graft copolymer as defined by claim 1, wherein the rubber substrate comprises at least 40 weight percent of the conjugated diene monomer.

4. A graft copolymer as defined by claim 3, wherein the rubber substrate comprises from about 50 to about 80 weight percent of the conjugated diene monomer.

5. A graft copolymer as defined by claim 1, wherein the weight ratio of monovinylidene aromatic monomer to acrylic monomer in the rubber substrate is greater than about 1.

6. A graft copolymer as defined by claim 1, wherein the grafted portion is formed from a styrene monomer and acrylonitrile.

7. A graft copolymer as defined by claim 1, wherein the weight ratio of monovinylidene aromatic monomer to acrylic monomer in the grafted portion is greater than about 1.

8. A polymer blend composition comprising (a) a graft copolymer comprising a rubber substrate and a grafted portion, said rubber substrate being formed by batch emulsion polymerization of a mixture comprising a conjugated diene monomer, an aromatic monovinylidene monomer and an acrylic monomer, and having an average particle size of greater than about 200 nm, and (b) at least one additional thermoplastic polymer.

9. A polymer blend composition as defined by claim 8, comprising from about 5 to about 95 weight percent of the graft copolymer and from about 95 to about 5 weight percent of the at least one additional thermoplastic polymer.

10. A polymer blend composition as defined by claim 9, comprising from about 5 to about 50 weight percent of the graft copolymer and from about 95 to about 50 weight percent of the at least one thermoplastic polymer.

11. A polymer blend composition as defined by claim 8, wherein the at least one thermoplastic polymer comprises a styrene polymer.

12. A polymer blend composition as defined by claim 11, wherein the at least one thermoplastic polymer comprises a styrene-acrylonitrile polymer.

13. A polymer blend composition as defined by claim 8, wherein the aromatic monovinylidene monomer and the acrylic monomer are included in the rubber substrate of the graft copolymer in an amount sufficient to improve the multiaxial impact resistance of the blend composition.

14. A polymer blend composition as defined by claim 8, wherein the rubber substrate of the graft copolymer is formed from butadiene, a styrene monomer and acrylonitrile.

15. A polymer blend composition as defined by claim 8, wherein the grafted portion of the graft copolymer is formed from a styrene monomer and acrylonitrile.